# EUROPEAN PATENT SPECIFICATION

(11) **EP 4 164 041 B1**
(45) Date of publication and mention of the grant of the patent: **02.12.2026**
(21) Application number: 21862164.7
(22) Date of filing: 31.08.2021
(51) Int. Cl.: H01M 50/24, H01M 50/20

(54) **BATTERY MODULE AND BATTERY PACK INCLUDING THE SAME**
BATTERIEMODUL UND BATTERIEPACK DAMIT
MODULE DE BATTERIE ET BATTERIE LE COMPRENANT

(30) Priority: 31.08.2020 KR 20200110448; 30.08.2021 KR 20210114614
(43) Date of publication of application: 12.04.2023
(60) Divisional application: 26213306.9
(73) Proprietor: LG Energy Solution, Ltd., Seoul 07335 (KR)
(72) Inventor: KIM, Kwangmo, Daejeon 34122 (KR); SEONG, Junyeob, Daejeon 34122 (KR); JUNG, Hyemi, Daejeon 34122 (KR)
(74) Representative: Goddar, Heinz J.
(86) International application number: PCT/KR2021/011698
(87) International publication number: WO 2022/045868

(56) References cited:
- WO-A1-2019/126681
- CN-A- 110 061 158
- CN-A- 110 931 919
- CN-U- 210 516 845
- KR-A- 20110 064 507
- KR-A- 20150 113 044
- KR-A- 20160 041 311
- KR-A- 20160 125 930
- KR-A- 20170 046 330
- KR-A- 20200 021 609
- US-A1- 2017 040 577

## Description

### [Cross-Reference to Related Application(s)]

This application claims the benefit of priority based on Korean Patent Applications No. 10-2020-0110448 dated August 31, 2020, and No. 10-2021-0114614 dated August 30, 2021.

### [Technical Field]

The present invention relates to a battery module and a battery pack including the same, and more particularly, to a battery module having improved safety by delaying or blocking transfer of heat between cells, and a battery pack including the same.

### [Background]

CN 210 516 845 U relates to a power battery module.

CN 110 061 158 A relates to electric vehicle power batteries including a power battery sealing buffer heat insulation pad.

WO 2019/126681 A1 relates to systems for protection against propagation of thermal runaway between adjacent electrochemical cells.

CN 110 931 919 A relates to the technical field of batteries, and in particular to a heat insulation structure and a battery module.

US 2017/040577 A1 relates to a lithium secondary battery having improved penetration safety.

Secondary batteries that are easy to use with various product groups and have electrical characteristics such as high energy density have been generally applied to not only portable devices, but also electric vehicles, hybrid vehicles, or power storage devices which are driven by an electric drive source. These secondary batteries are attracting attention as a new energy source for improving eco-friendliness and energy efficiency in that the use of fossil fuels may be dramatically reduced and no by-products may be generated from the use of energy.

One to three battery cells are used per device in small mobile devices, but high-output and high-capacity battery cells are required for medium and large devices such as automobiles. Accordingly, a medium and large battery module in which a plurality of battery cells are electrically connected has been used.

Since it is preferable that the medium and large battery module should be manufactured in a lightweight and thin structure if possible, a prismatic battery, a pouch-type battery, etc. that may be stacked with a high degree of integration and have a small weight and high capacity have been mainly used as battery cells of the medium and large battery module. The battery module includes a frame member for accommodating a battery cell stack in an internal space thereof while covering top, bottom, left, and right surfaces of the battery cell stack to protect the cell stack from external impact, heat, or vibrations.

As described above, since the plurality of battery cells included in the battery module are stacked, when problems such as thermal runaway occur in any one of the battery cells, heat and flame generated from the cell may easily transfer to adjacent battery cells.

### [Summary]

The present invention has been made in an effort to provide a battery module and a battery pack including the same having advantages of suppressing a chain combustion reaction by delaying or blocking transfer of heat to adjacent battery cells even if a problem such as thermal runaway occurs in any one of the battery cells inside the battery module.

However, problems to be solved by exemplary embodiments of the present invention are not limited to the abovementioned problems, and can be variously expanded within the scope of the technical idea included in the present invention.

An exemplary embodiment of the present invention provides a battery module including: a battery cell stack in which a plurality of battery cells each including an electrode assembly are stacked; a housing accommodating the battery cell stack; and at least one flame-retardant pad interposed between at least one pair of adjacent battery cells among the plurality of battery cells or between the battery cell stack and the housing, in which an area of the flame-retardant pad is equal to or larger than that of the electrode assembly.

The flame-retardant pad includes a silicone foam pad.

The silicone foam pad includes at least one first silicone foam pad and at least one second silicone foam pad, and the density of the first silicone foam pad is higher than the density of the second silicone foam pad.

The silicone foam pad may include one of the first silicone foam pad, and two of the second silicone foam pads disposed on both sides of the first silicone foam pads.

The silicone foam pad may include one of the second silicone foam pad, and two of the first silicone foam pads disposed on both sides of the second silicone foam pads.

Another exemplary embodiment of the present invention provides a battery pack including: the at least one battery module described above; and a pack case packaging the at least one battery module.

According to exemplary embodiments, by including a flame-retardant pad between battery cells, even if a problem such as thermal runaway occurs in any one battery cell inside the battery module, it is possible to delay or block transfer of heat and flame to adjacent battery cells and improve safety of the module by suppressing a chain combustion reaction.

### [Brief Description of the Drawings]

FIG. 1 is a perspective view of a battery module according to an exemplary embodiment of the present invention.
FIGS. 2A and 2B are cross-sectional views along line A-A' of FIG. 1.
FIG. 3 is a perspective view of one battery cell included in a battery cell stack of FIG. 1.
FIG. 4 is a cross-sectional view of the battery cell of FIG. 3 and a cross-sectional view of a flame-retardant pad along line B-B' of FIG. 3.
FIG. 5 is a top view of the battery cell and the flame-retardant pad of FIG. 4.
FIG. 6 is an enlarged view of portion C of FIG. 5.
FIG. 7 is a graph illustrating results of a thermal runaway experiment according to an example and a comparative example.
FIG. 8 and Fig. 9 are illustrations of flame-retardant pads according to embodiments of the present invention.

### [Detailed Description]

Hereinafter, several exemplary embodiments of the present invention will be described in detail with reference to the accompanying drawings so that those skilled in the art to which the present invention pertains may easily practice the present invention. However, the present invention may be implemented in various different forms and is not limited to exemplary embodiments provided herein.

Portions unrelated to the description will be omitted in order to obviously describe the present invention, and similar components will be denoted by the same or similar reference numerals throughout the present specification.

In addition, since sizes and thicknesses of the respective components illustrated in the drawings are arbitrarily illustrated for convenience of explanation, the present invention is not necessarily limited to those illustrated in the drawings. In the drawings, the thickness of layers, films, panels, regions, etc., are exaggerated for clarity. In addition, in the accompanying drawings, thicknesses of some of layers and regions have been exaggerated for convenience of explanation.

In addition, it will be understood that when an element such as a layer, film, region, or substrate is referred to as being "on" another element, it can be directly on the other element or intervening elements may also be present. In contrast, when an element is referred to as being "directly on" another element, there are no intervening elements present. In addition, the fact that an element is positioned "above" or "on" a reference element means that it is positioned above or below the reference element, and is not necessarily means that is positioned "above" or "on" in an opposite direction to gravity.

In addition, unless explicitly described to the contrary, the word "comprise", and variations such as "comprises" or "comprising", will be understood to imply the inclusion of stated elements but not the exclusion of any other elements.

Further, throughout the specification, the word "plan view" refers to a view when a target is viewed from the top, and the word "cross-sectional view" refers to a view when a cross section of a target taken along a vertical direction is viewed from the side.

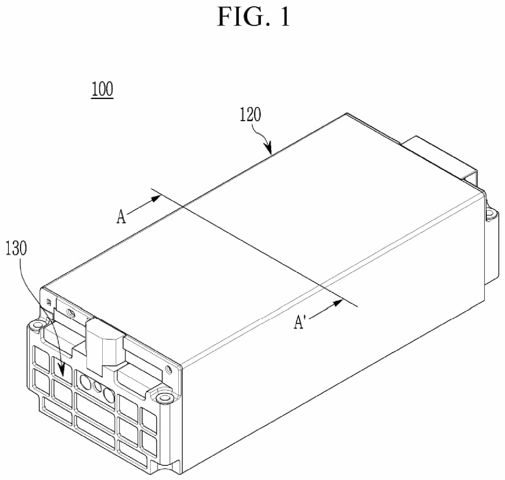

Hereinafter, a battery module according to an exemplary embodiment of the present invention will be described with reference to FIGS. 1 to 6.

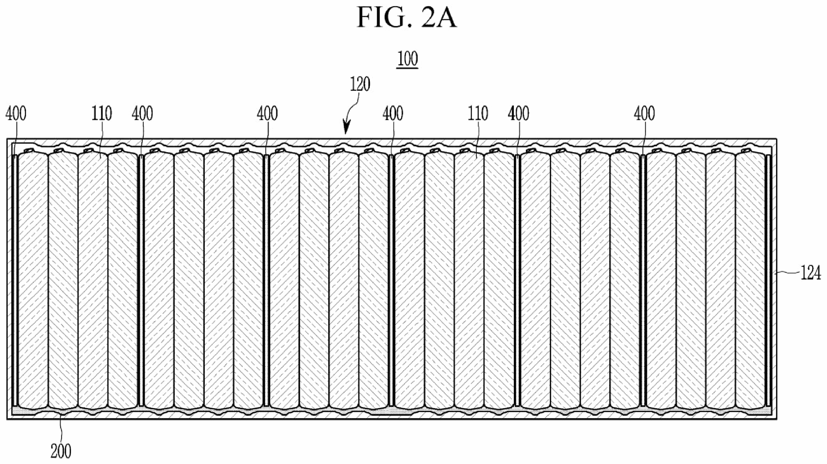

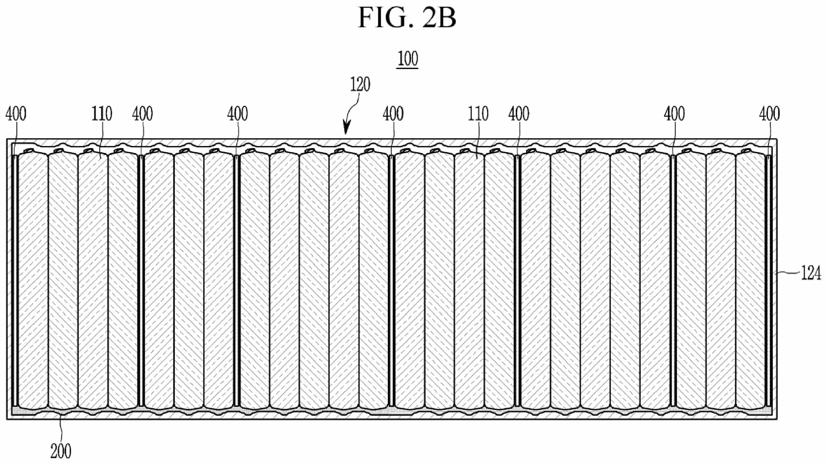

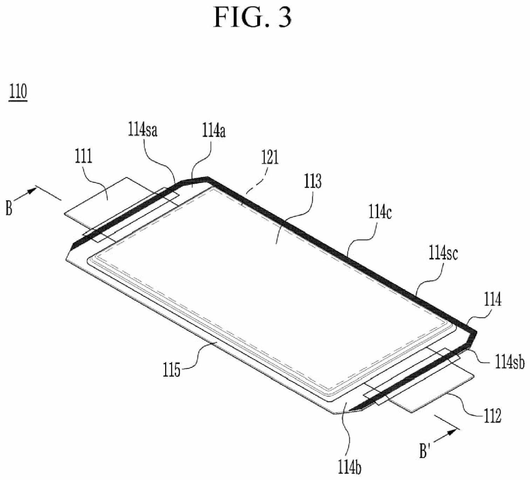

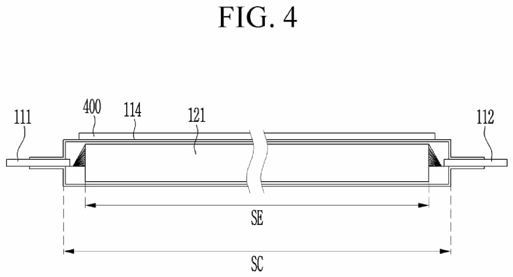

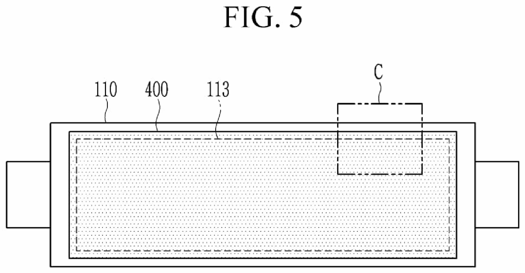

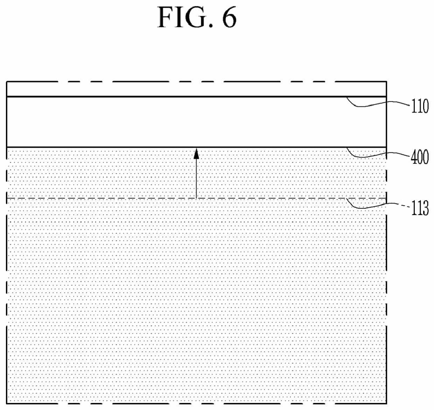

FIG. 1 is a perspective view of a battery module according to an exemplary embodiment of the present invention, FIGS. 2A and 2B are cross-sectional views along line A-A' of FIG. 1, FIG. 3 is a perspective view of one battery cell included in a battery cell stack of FIG. 1, FIG. 4 is a cross-sectional view of the battery cell of FIG. 3 and a cross-sectional view of a flame-retardant pad along line B-B' of FIG. 3, FIG. 5 is a top view of the battery cell and the flame-retardant pad of FIG. 4, and FIG. 6 is an enlarged view of portion C of FIG. 5.

As illustrated in FIGS. 1, 2A and 2B, a battery module 100 according to the present exemplary embodiment includes a battery cell stack 101 including a plurality of battery cells 110, a housing 120 accommodating the battery cell stack 101, and a pair of end plates 130 each positioned on front and rear surfaces of the battery cell stack 101.

As illustrated in FIG. 1, the housing 120 may be in the form of a metal plate in which an upper surface, a lower surface, and both surfaces are integrated. That is, in the case of the housing 120 in the form of a square tube, a space in which the battery cell stack 101 may be accommodated is formed therein, and a pair of end plates 130 is coupled to both end portions in the form of the square tube. However, the present invention is not limited thereto, and various types of housings 120 may be applied. As a possible modification, the housing 120 in a form in which the upper cover and the U-shaped frame are coupled is also possible, and is not particularly limited.

The battery cell stack 101 includes a plurality of battery cells 110 stacked in one direction, and the plurality of battery cells 110 may be stacked standing parallel to a sidewall 124 of the housing 120 as illustrated in FIGS. 2A and 2B.

The battery cell 110 is preferably a pouch-type battery cell. For example, as illustrated in FIG. 3, the battery cell 110 according to the present exemplary embodiment has a structure in which two electrode leads 111 and 112 face each other, and thus, protrude from one end portion 114a and the other end portion 114b of a battery body 113, respectively. An electrode lead included in each battery cell 110 is a positive electrode lead or a negative electrode lead, and end portions of the electrode leads 111 and 112 of each battery cell 110 may be bent in one direction, and thus, may contact end portions of electrode leads 111 and 112 of other adjacent battery cells 110. The two electrode leads 111 and 112 in contact with each other may be fixed to each other by welding or the like, and thus, an electrical connection between the battery cells 110 inside the battery cell stack 101 may be made. In addition, electrode leads aligned at both end portions of the battery cell stack 101 may be coupled to a bus bar frame (not illustrated) to be electrically connected to a bus bar mounted on the bus bar frame. The pair of end plates 130 covering the bus bar frames are provided on both open sides of the housing 120, respectively, and thus, may be coupled to the housing 120 by a method such as welding.

The battery cell 110 may be manufactured by adhering both end portions 114a and 114b of the case 114 and both side surfaces 114c connecting the end portions 114a and 114b in a state in which the electrode assembly 121 is accommodated in the battery case 114. In other words, the battery cell 110 according to the present exemplary embodiment has a total of three sealing parts 114sa, 114sb, and 114sc, and the sealing parts 114sa, 114sb, and 114sc are sealed by a method such as thermal fusion, and the other one side part may be formed of a connection part 115.

The electrode assembly 121 and an electrolytic solution may be accommodated in the battery case 114. The electrode assembly 121 may be configured in a form in which a positive electrode plate and a negative electrode plate are disposed with a separator interposed therebetween. In this case, the electrode assembly 121 may have a structure in which one positive electrode plate and one negative electrode plate are wound with a separator interposed therebetween, or a structure in which a plurality of positive electrode plates and a plurality of negative electrode plates are stacked with a separator interposed therebetween. Each of the positive and negative electrode plates may be formed as a structure in which an active material slurry is applied to an electrode current collector, in which the slurry is typically formed by stirring an active material, a conductive material, a binder, and a plasticizer in a state in which a solvent is added.

An uncoated region to which the slurry is not applied to the electrode plate may exist in the electrode assembly 121, and electrode tabs corresponding to each electrode plate may be formed in the uncoated region. In this case, the two electrode leads 111 and 112 respectively extending from a positive electrode tab and a negative electrode tab for electrical connection with an external terminal or a device may face each other, and thus, protrude at one end portion 114a and the other end portion 114b of the battery body 113, respectively.

A thermally conductive resin layer 200 may be positioned between the battery cell stack 101 and a bottom of the housing 120. The thermally conductive resin layer 200 may transfer heat generated from the battery cell stack 101 to the bottom of the battery module 100 and also serve to fix the battery cell stack 101 to the bottom thereof.

As illustrated in FIGS. 2A and 2B, a plurality of flame-retardant pads 400 may be interposed between the battery cells 110. As illustrated in FIG. 2A, the plurality of flame-retardant pads 400 may be inserted one by one whenever three to four battery cells 110 are stacked, and thus, the plurality of flame-retardant pads 400 may be disposed at equal intervals. In addition, as illustrated in FIG. 2B, the plurality of flame-retardant pads 400 may be disposed at different intervals. The arrangement of the flame-retardant pads 400 is not particularly limited, and the number and thickness thereof may be appropriately adjusted as necessary. In this way, by arranging the flame-retardant pads 400 to be spaced at equal or non-equal intervals, thermal impedance may increase when the thermal runaway occurs in the battery cells 110 in the battery module 100, thereby preventing or delaying transfer of heat between adjacent battery cells 110. In addition, the flame-retardant pad 400 may also be disposed between the battery cell 110 stacked on an outermost side of the battery cell stack 101 and the sidewall 124. When an issue such as the thermal runaway occurs within the battery module 100, the flame-retardant pad 400 may not only delay or block the transfer of heat from the corresponding battery cell to adjacent battery cells, but also absorb an expansion of the battery cell 110 to perform an expansion control.

An area of the flame-retardant pad 400 is equal to or larger than that of the electrode assembly 121 included in the battery cell 110. When the area of the flame-retardant pad 400 is formed to be smaller than that of the electrode assembly 121, a uniform pressure may not be applied to the battery cell 110, so problems such as performance degradation may occur. In particular, the flame-retardant pad 400 may serve to absorb swelling when the swelling of the battery cell 110 occurs inside the battery module 100, and when the area is smaller than the electrode assembly 121, the swelling that occurs in the portion where the flame-retardant pad 400 is not formed may not be absorbed.

As illustrated in FIG. 4, the area of the electrode assembly 121 may be determined by a length SE or the like of one side of the electrode assembly, and the area of the battery cell 110 may be determined by a length SC of one side of the battery cell. More specifically, the area of the electrode assembly 121 may be determined by an area of the positive electrode, the negative electrode, or the separator of the electrode assembly 121. In the battery cell 110, the electrode assembly 121 does not occupy the entire space inside the battery case 114, but a space for connection with the electrode leads 111 and 112 is further present. For example, the electrode assembly 121 may be about 90% of the area of the battery cell 110. In this case, in order to effectively control the swelling of the battery cell 110, at least the area of the flame-retardant pad 400 needs to be equal to the area of the electrode assembly 121 as described above. When the flame-retardant pad 400 supports an area smaller than that of the electrode assembly 121, the swelling that occurs is rather concentrated on a portion that does not correspond to the flame-retardant pad 400, and thus, the battery cell 110 may be damaged. More specifically, the area of the flame-retardant pad 400 is preferably equal to or larger than that of the negative electrode of the electrode assembly 121. For example, in the chemical reaction of a lithium ion battery, the negative electrode is designed to be wider and longer than the positive electrode because the negative electrode must receive lithium ions from the positive electrode. Accordingly, it is not preferable that the area of the flame-retardant pad 400 is smaller than the area of the negative electrode, because swelling generated during charging and discharging cannot be sufficiently absorbed.

Therefore, as illustrated in FIGS. 4 to 6, the flame-retardant pad 400 should be formed equal to or larger than that of the electrode assembly 121 included in the battery cell 110, and as a result, the swelling control performance of the battery cell 110 by the flame-retardant pad 400 may also be maintained excellently. In addition, it is possible to prevent the swelling from being concentrated in a local portion of the battery cell 110 to deteriorate the battery performance.

In addition, while the area of the flame-retardant pad 400 may also equal to or larger than that of the electrode assembly 121, it is preferably a size that does not extend to a portion where the electrode leads 111 and 112 coupled to the electrode tabs extending from the electrode assembly 121 are disposed.

When the flame-retardant pad 400 extends to the portion where the electrode leads 111 and 112 are disposed, interference occurs in the process of assembling for electrical connection between the electrode leads 111 and 112 and other components, which may not be desirable. When the flame-retardant pad 400 extends to the portion where the electrode leads 111 and 112 are disposed, it is not preferable because interference occurs in the process of assembling for electrical connection between the electrode leads 111 and 112 and other components. In addition, damage to each other may occur due to contact between the flame-retardant pad 400 and the electrode leads 111 and 112. Therefore, it is preferable that the area of the flame-retardant pad 400 is set so that the electrode leads 111 and 112 are not disposed in the portion protruding from the electrode cell 110.

The flame-retardant pad 400 may be formed of a silicone foam pad to prevent the transfer of heat and flame generated to the battery cell 110. The silicone foam pad is a foam pad with pores formed therein, and has high thermal and chemical stability, and has excellent flame retardant and thermal insulation properties. In particular, it is possible to secure better flame-retardant properties by applying a silicone foam pad made of thermosetting foamed silicone.

In addition, from the viewpoint of the swelling control of the battery cell 110 described above, the silicone foam pad is suitably applicable in that it has high elasticity (high compression resistance and high rebound elasticity) and high durability. In particular, according to the swelling of the battery cell 110, the battery cell 110 repeatedly contracts and expands. In order to withstand the repeated contraction and expansion of the battery cell 110 and prevent the battery cell 110 from being deformed, high elasticity is required. To this end, the silicone foam pad may be used. Specifically, the silicone foam pad may exert a compressive force of 10 kPA to 100 kPa in 10% to 60% of a compression range (compression force deflection (CFD)). For example, CFD 25% (ASTM D 3574) value may be 0.05~0.18 kgf/cm², as an initial value. Further, the silicone foam preferably has a long-term restoration lifespan (durability) of 10 years or more.

In the case of the silicone foam pad, it is preferable that the content of hydrocarbon is small to minimize the collapse of the structure of the battery cell 110 due to the combustion under the condition that the thermal runaway occurs in the battery cell 110. That is, as hydrocarbon is thermally decomposed into gas phases such as CO, CO₂, and water vapor by the combustion reaction when thermal runaway occurs in the battery cell, the weight loss of the flame-retardant pad may increase and the structure of the battery cell may collapse, so the content of hydrocarbon in the silicone foam pad is preferably adjusted as little as possible. In addition, it is preferable that the foam pad does not contain a halogen element in order not to generate a toxic gas during the combustion.

An experiment was performed at a time of a voltage drop when the thermal runaway occurs for the battery module 100 to which the silicone foam pad is applied as the flame-retardant pad 400 and the battery module to which the flame-retardant pad 400 is not applied.

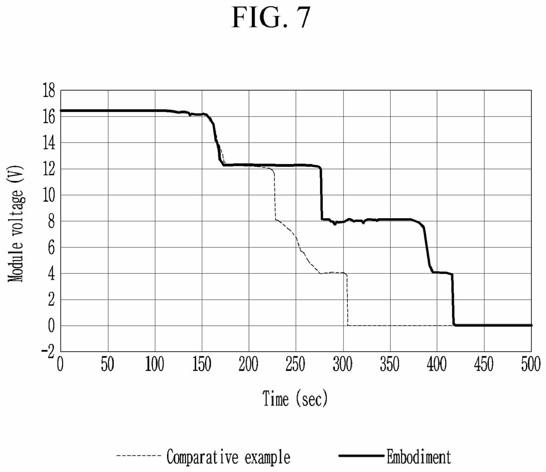

FIG. 7 is a graph illustrating results of a thermal runaway experiment for the example of the present invention and the comparative example.

In the Example, the battery module included 12 battery cells, a flame-retardant pad was applied to every 6 battery cells, and a total of two flame-retardant pads were inserted to configure the battery module. In the Comparative Example, in the same configuration, the battery module was constructed by applying a polyurethane pad instead of the flame-retardant pad. The battery module was heated by attaching a heating pad to an end of the battery module, and the thermal runaway occurred at about 140 seconds after starting heating by applying voltage to the heating plate. After that, the time point of the voltage drop of the entire battery module was measured.

As illustrated in FIG. 7, in Comparative Example, the battery module voltage became 0 at about 300 seconds, but in the Example, the voltage became 0 at about 420 seconds. That is, according to the embodiment of the present invention, it was confirmed that the delay or blocking of the transfer of heat from a cell where the thermal runaway occurred to adjacent cells was appropriately performed, and thus the time point of the voltage drop due to the thermal runaway is delayed as much as possible.

As described above, according to the exemplary embodiment, by providing the flame-retardant pad 400 between the battery cells 110 of the battery module 100, it is possible to delay or block the transfer of heat to adjacent battery cells when the thermal runaway occurs, so the safety of the battery may be improved. In addition, by making the area of the flame-retardant pad 400 equal to or larger than that of the electrode assembly 121, it is possible to prevent problems such as damage to the battery cells and electrodes and deterioration in performance/cycle-life which may be caused by the formation of non-uniform surface pressure between the battery cells.

The flame-retardant pad 400 may be modified in various forms and applied to the battery module 100.

In a modified example, various properties may be imparted to the flame-retardant pad 400 by controlling the pores inside the silicone foam pad used as the flame-retardant pad 400. That is, when manufacturing the silicone foam pad, a ratio and size of pores may be adjusted (that is, density is adjusted) by adjusting an addition ratio of a foaming agent and a curing agent. In this case, as the density of the pores increases, the thermal insulation property may be improved, and as the density of the pores decreases, the mechanical properties may be improved. Accordingly, it is possible to obtain a silicone foam pad having desired thermal insulation property and mechanical properties by properly adjusting the density of the pores.

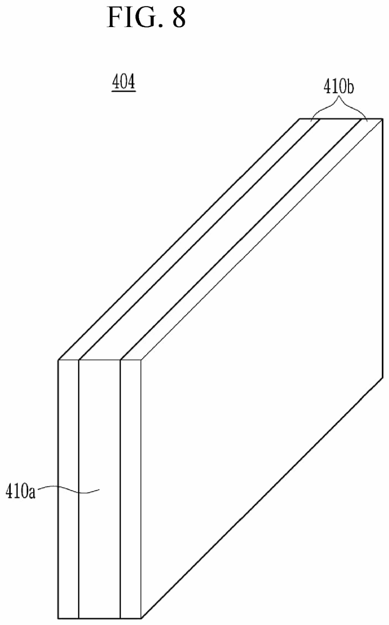

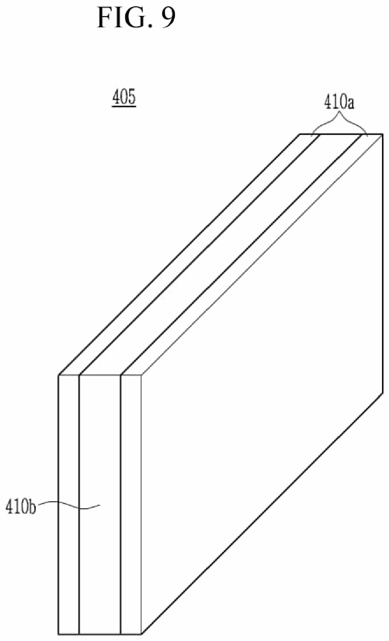

FIGS 8 and 9 are illustrations of flame-retardant pads according to exemplary embodiments of the present invention. As illustrated in FIGS 8 and 9, the flame-retardant pads 404 and 405 according to the exemplary embodiments include multilayered silicone foam pads 410a and 410b. In particular, the flame-retardant pads 404 and 405 include at least one first silicone foam pad 410a and at least one second silicone foam pad 410b. In this case, the density of the first silicone foam pad 410a is higher than the density of the second silicone foam pad 410b. The first silicone foam pad 410a and second silicone foam pad 410b have a configuration in which the first silicone foam pad 410a is disposed in the center and the second silicone foam pads 410b are disposed on both sides of the first silicone foam pad 410a, as shown in FIG. 8, or have a configuration in which the second silicone foam pad 410b is disposed in the center and the first silicone foam pads 410a are disposed on both sides of the second silicone foam pad 410b, as shown in FIG. 9. As such, by using the high-density and low-density silicone foam pads 410a and 410b together, the flame-retardant pads 404 and 405 can effectively control the expansion of the battery cell and effectively delay or block the transfer of heat. That is, the first silicone foam pad 410a having a high density is advantageous in more effectively delaying or blocking heat transfer under a thermal runaway condition, but may be somewhat disadvantageous in controlling cell expansion. However, by providing the second silicone foam pad 410b having a low density, it is possible to have a buffering effect on the expansion of the battery cell 110 and thus effectively achieve the expansion control of the battery cell 110. The density of the silicone foam pad 410a and 410b may be controlled by adjusting the size and the number of pores inside the silicone foam pad 410a and 410b, but is not limited thereto.

As such, according to the exemplary embodiment of the present invention, it is possible to provide a flame-retardant pad that can more effectively absorb the swelling of the battery cell while having better flame retardancy, heat insulation, and mechanical properties, by changing the physical properties of the silicone foam pad. Accordingly, it is possible to effectively control the swelling of the battery cell as the temperature rises in the battery module, and to more effectively delay or block the transfer of heat and suppress the combustion reaction even in a thermal runaway condition at a high temperature. Meanwhile, one or more battery modules according to an exemplary embodiment of the present invention may be packaged in a pack case to form a battery pack.

The above-described battery module and battery pack including the same may be applied to various devices. Such a device may be applied to transportation means such as an electric bicycle, an electric vehicle, and a hybrid vehicle, but the present invention is not limited thereto and is applicable to various devices that can use a battery module and a battery pack including the same, which belongs to the scope of the present invention.

Although the exemplary embodiment of the present invention has been described in detail hereinabove, the scope of the present invention is not limited thereto. That is, several modifications and alterations made by a person of ordinary skill in the art using a basic concept of the present invention as defined in the claims fall within the scope of the present invention.

## Claims

1. A battery module (100), comprising:
a battery cell stack (101) comprising a plurality of battery cells (110), wherein each of the plurality of battery cells (110) includes an electrode assembly (121);
a housing (120) accommodating the battery cell stack (101); and
at least one flame-retardant pad (400, 404, 405) interposed between at least one pair of adjacent battery cells (110) among the plurality of battery cells (110) or between the battery cell stack (101) and the housing (120),
wherein the at least one flame-retardant pad (400, 404, 405) includes a silicone foam pad (410)
wherein an area of the at least one flame-retardant pad (400, 404, 405) is equal to or larger than an area of the electrode assembly (121) of each of the plurality of battery cells (110), **characterized in that**
the silicone foam pad (410) includes at least one first silicone foam pad (410a) and at least one second silicone foam pad (410b), and
a density of the first silicone foam pad (410a) is higher than a density of the second silicone foam pad (410b).

2. The battery module (100) of claim 1, wherein:
the silicone foam pad (410) includes one first silicone foam pad (410a) and two second silicone foam pads (410b), and
the one first silicone foam pad (410a) is disposed between the two second silicone foam pads (410b).

3. The battery module (100) of one of the preceding claims, wherein:
the silicone foam pad (410) includes one second silicone foam pad (410b) and two first silicone foam pads (410a), and
the one second silicone foam pad (410b) is disposed between the two first silicone foam pads (410a).

4. A battery pack, comprising:
at least one battery module (100) of claim 1; and
a case housing (120) the at least one battery module (100).

## Patentansprüche

1. Batteriemodul (100), umfassend:
einen Batteriezellenstapel (101), der eine Vielzahl von Batteriezellen (110) umfasst, wobei jede der Vielzahl von Batteriezellen (110) eine Elektrodenbaugruppe (121) aufweist;
ein Gehäuse (120), das den Batteriezellenstapel (101) aufnimmt; und
wenigstens ein flammhemmendes Kissen (400, 404, 405), das zwischen wenigstens einem Paar benachbarter Batteriezellen (110) der Vielzahl von Batteriezellen (110) oder zwischen dem Batteriezellenstapel (101) und dem Gehäuse (120) angeordnet ist,
wobei das wenigstens eine flammhemmende Kissen (400, 404, 405) ein Silikonschaumkissen (410) aufweist
wobei eine Fläche des wenigstens einen flammhemmenden Kissens (400, 404, 405) gleich oder größer ist als eine Fläche der Elektrodenbaugruppe (121) jeder der Vielzahl von Batteriezellen (110), **dadurch gekennzeichnet, dass**
das Silikonschaumkissen (410) wenigstens ein erstes Silikonschaumkissen (410a) und wenigstens ein zweites Silikonschaumkissen (410b) umfasst, und
eine Dichte des ersten Silikonschaumkissens (410a) höher ist als eine Dichte des zweiten Silikonschaumkissens (410b).

2. Batteriemodul (100) nach Anspruch 1, wobei:
das Silikonschaumkissen (410) ein erstes Silikonschaumkissen (410a) und zwei zweite Silikonschaumkissen (410b) umfasst, und
das eine erste Silikonschaumkissen (410a) zwischen den beiden zweiten Silikonschaumkissen (410b) angeordnet ist.

3. Batteriemodul (100) nach einem der vorhergehenden Ansprüche, wobei:
das Silikonschaumkissen (410) ein zweites Silikonschaumkissen (410b) und zwei erste Silikonschaumkissen (410a) umfasst, und
das eine zweite Silikonschaumkissen (410b) zwischen den beiden ersten Silikonschaumkissen (410a) angeordnet ist.

4. Batteriepack, umfassend:
wenigstens ein Batteriemodul (100) nach Anspruch 1; und
ein Gehäuse (120), das das wenigstens eine Batteriemodul (100) einhaust.

## Revendications

1. Module de batterie (100), comprenant :
un empilement de cellules de batterie (101) comprenant une pluralité de cellules de batterie (110), chacune de la pluralité de cellules de batterie (110) comprenant un ensemble d'électrodes (121) ;
un boîtier (120) accueillant l'empilement de cellules de batterie (101) ; et
au moins un tampon ignifuge (400, 404, 405) intercalé entre au moins une paire de cellules de batterie adjacentes (110), parmi la pluralité de cellules de batterie (110), ou entre l'empilement de cellules de batterie (101) et le boîtier (120),
l'au moins un tampon ignifuge (400, 404, 405) comprenant un tampon un coussin en mousse de silicone (410)
une superficie de l'au moins un tampon ignifuge (400, 404, 405) étant égale ou supérieure à une superficie de l'ensemble d'électrodes (121) de chacune de la pluralités de cellules de batterie (110), **caractérisée en ce que**
le tampon en mousse de silicone (410) comprend au moins un premier tampon en mousse de silicone (410a) et au moins un deuxième tampon en mousse de silicone (410b), et
la densité du premier tampon en mousse de silicone (410a) étant supérieure à la densité du deuxième tampon en mousse de silicone (410b).

2. Module de batterie (100) selon la revendication 1,
le tampon en mousse de silicone (410) comprenant au moins un premier tampon en mousse de silicone (410a) et deux deuxièmes tampons en mousse de silicone (410b), et
le premier tampon en mousse de silicone (410a) étant disposé entre les deux deuxièmes tampons en mousse de silicone (410b).

3. Module de batterie (100) selon une des revendications précédentes,
le tampon en mousse de silicone (410) comprenant un deuxième tampon en mousse de silicone (410b) et deux premiers tampons en mousse de silicone (410a), et
l'un deuxième tampon en mousse de silicone (410b) étant disposé entre les deux premiers tampons en mousse de silicone (410a).

4. Bloc-batterie comprenant :
au moins un module de batterie (100) selon la revendication 1; et
un boîtier (120) renfermant l'au moins un module batterie (100).
